Europäisches Patentamt

European Patent Office

Office européen des brevets

(19)

(11) Publication number: **0 067 662**
**A1**

(12) # EUROPEAN PATENT APPLICATION

(21) Application number: **82302990.5**

(22) Date of filing: **09.06.82**

(51) Int. Cl.³: **H 02 K 7/112**
**F 16 D 67/06**

(30) Priority: **11.06.81 JP 89881/81**

(43) Date of publication of application:
**22.12.82 Bulletin 82/51**

(84) Designated Contracting States:
**DE FR GB**

(71) Applicant: **Matsushita Electric Industrial Co., Ltd.**
**1006, Oaza Kadoma**
**Kadoma-shi Osaka-fu, 571(JP)**

(72) Inventor: **Dohi, Takashi**
**20-14-410, 1-chome, Higashi Nakaburi**
**Hirakata-shi Osaka(JP)**

(72) Inventor: **Shinozaki, Nozomu**
**62-11, Ikaga Nishimachi**
**Hirakata-shi Osaka(JP)**

(72) Inventor: **Neki, Shigeo**
**2-1-312, 3-chome, Taishibashi**
**Asahi-ku Osaka(JP)**

(74) Representative: **Senior, Alan Murray et al,**
**J.A. KEMP & CO 14 South Square Gray's Inn**
**London WC1R 5EU(GB)**

(54) Solenoid clutch motor having axially adjustable elements.

FIG. 4

(57) A solenoid clutch motor includes a rotor shaft (28), a flywheel (26) secured thereto, an output shaft (29), first and second cores (21a, 22a), and clutch and brake coils (21, 22) mounted in the first and second cores (21a, 22a) respectively. A rotary member (37) having a pair of axially spaced apart oppositely facing first and second surfaces (52, 53) is mounted on the output shaft. A clutch disc (27) is axially but not rotatably slidably secured to the flywheel and axially spaced from the first core for engaging with the first surface (52) of the rotary member in response to energization of the clutch coil. An axially slidable but not rotatable brake disc (23) is provided in an axially spaced location from the second core (22a) for engaging with the second surface (53) of the rotary member in response to energization of the brake coil (22). Means (41, 43; 39, 45) is provided for axially adjusting the position of either one of the rotary member (37) and the first core (21).

EP 0 067 662 A1

Description    (TITLE OF THE INVENTION)

SOLENOID CLUTCH MOTOR HAVING AXIALLY ADJUSTABLE ELEMENTS

BACKGROUND OF THE INVENTION

The present invention relates to a selenoid clutch motor which couples the motive power of the rotor to an output shaft in response to energization of a clutch coil and decouples the motive power in response to energization of a brake coil.

Conventional solenoid clutch motors comprise a clutch disc secured to a flywheel and a brake disc statinarily secured to a housing structure. A pair of rotary discs each having a lining is axially but not rotatably slidably mounted on an output shaft for making pressure contact with the clutch and brake discs, respectively, in response to energization of clutch and brake coils which are permanently secured to the housing.

One disadvantage of such conventional solenoid clutch motors relates to the fact that the amount of magnetic coupling between the clutch coil and the clutch disc cannot be optimized to meet the specific torque demand. Another disadvantage resides in the fact that as the lining of the clutch disc wears the hard bodies of the clutch engaging members will eventually contact with each other terminating the life span of the motor.

# SUMMARY OF THE INVENTION

The primary object of the invention is therefore to provide a solenoid clutch motor which obviates the problems encountered with conventional solenoid clutch motors.

The solenoid clutch motor of the invention includes a stator, a rotor securely mounted on a rotor shaft, a flywheel secured to the rotor shaft for rotation therewith, an output shaft coaxial with the rotor shaft, first and second cores each being open in opposite directions, and clutch and brake coils mounted in the first and second cores respectively. The motor comprises a rotary member having a pair of axially spaced apart oppositely facing first and second surfaces mounted for rotation with the output shaft. A clutch disc is axially but not rotatably slidably secured to the flywheel for rotation therewith and axially spaced from the open end of the first core for making pressure contact with the first surface of the rotary member in response to energization of the clutch coil. An axially slidable but not rotatable brake disc is provided in an axially spaced location from the open end of the second core for making pressure contact with the second surface of the rotary member in response to energization of the brake coil. Means is provided for axially adjusting the position of one of the rotary member and the first core.

The solenoid clutch motor of the invention is advantageous for use in applications where a variety of torque demands are required to be met. A typical example of such applications is industrial sewing machines.

### BRIEF DESCRIPTION OF THE DRAWINGS

The present invention will be described in further detail with reference to the accompanying drawings, in which:

Figs. 1 and 2 are illustrations of a typical example of conventional solenoid clutch motors;

Fig. 3 is a longitudinal view in cross-section of a solenoid clutch motor of the invention; and

Fig. 4 is a detailed, partial view of the motor of Fig. 3.

### DETAILED DESCRIPTION

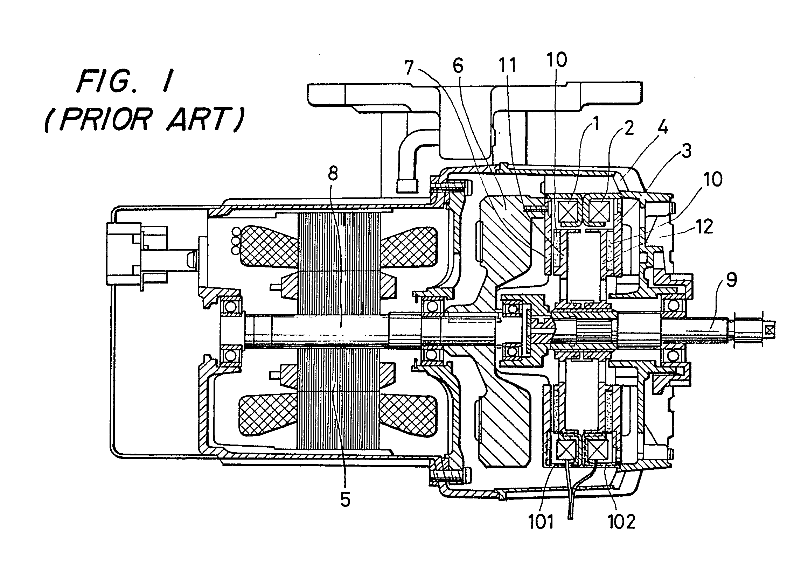

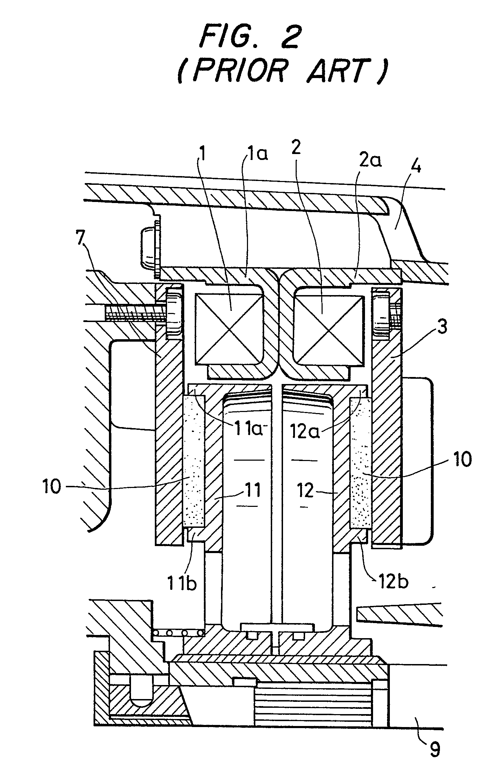

Before going into the detail of the present invention reference is first had to Figs. 1 and 2 in which a conventional solenoid clutch motor is illustrated. The solenoid clutch motor comprises a clutch coil 1 mounted in a ring core 1a, a brake coil 2 mounted in a ring core 2a, and a stationary brake disc 3 all of which are securely fixed to the motor housing by a bracket 4. A rotor 5 having a driving shaft 8 drives a flywheel 6 to which a driving clutch disc 7 is rigidly fixed. Coaxially with the driving shaft 8 is rotatably mounted a driven or output shaft 9 with which a driven clutch disc 11 and a rotary brake disc 12 are axially but not rotatably slidably coupled by spline connection. Each of the driven clutch disc 11 and rotary brake disc 12 is provided with outer and inner annular edges a and b forming an annular groove therebetween in which a lining 10 is secured.

When the clutch coil 1 is energized a magnetic circuit 101 is formed through the core 1a, driving clutch disc 7 and driven clutch disc 11 to cause the latter to pressure contact with the driving clutch disc 7 to transmit the motive power of the rotor 8 to the output shaft 9. In a well known manner the current in the clutch coil 1 is controlled by a speed control circuit, not shown, so that the speed of the output shaft 9 is driven at a desired speed. Upon energization of the brake coil 2 a magnetic circuit 102 is formed through the core 2a, stationary brake disc 3 and rotary brake disc 12 to cause the latter to pressure contact with the stationary brake disc 3 to rapidly decelerate the output shaft 9.

Since the conventional construction permits no adjustment of the air gap between the clutch discs 7 and 11 and the air gap between the brake discs 3 and 12, it is impossible to make adjustment on the magnetic coupling between them. Because the solenoid clutch motor is used extensively as a power source of industrial sewing machines which are designed to operate under a variety of loading conditions for specific purposes, one disadvantage of such conventional solenoid clutch motors relates to the incapability of optimizing the amount of magnetic coupling to the specific loading requirement of each industrial sewing machine.

Another disadvantage of conventional solenoid clutch motors resides in the fact that as the linings 10 are worn with operating time the driving clutch disc 7 will eventually contact with the outer and inner annular edges 11a, 11b of the driven clutch disc 11. Thus, the usable lifetime of the solenoid clutch motor is relatively short.

While the lifetime could be increased by increasing the thickness of the lining 10 on the driven clutch disc 11, this would result in an increase in the air gap between it and the driven clutch disc 7 causing a decrease in the amount of driving power of the motor.

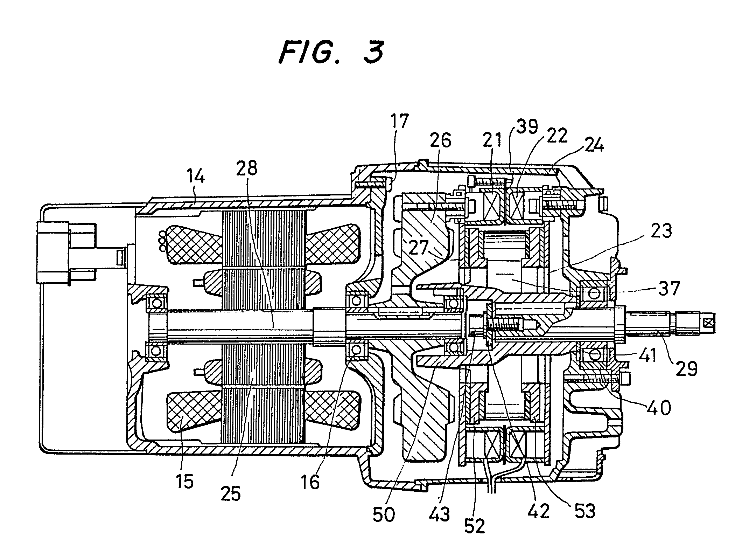

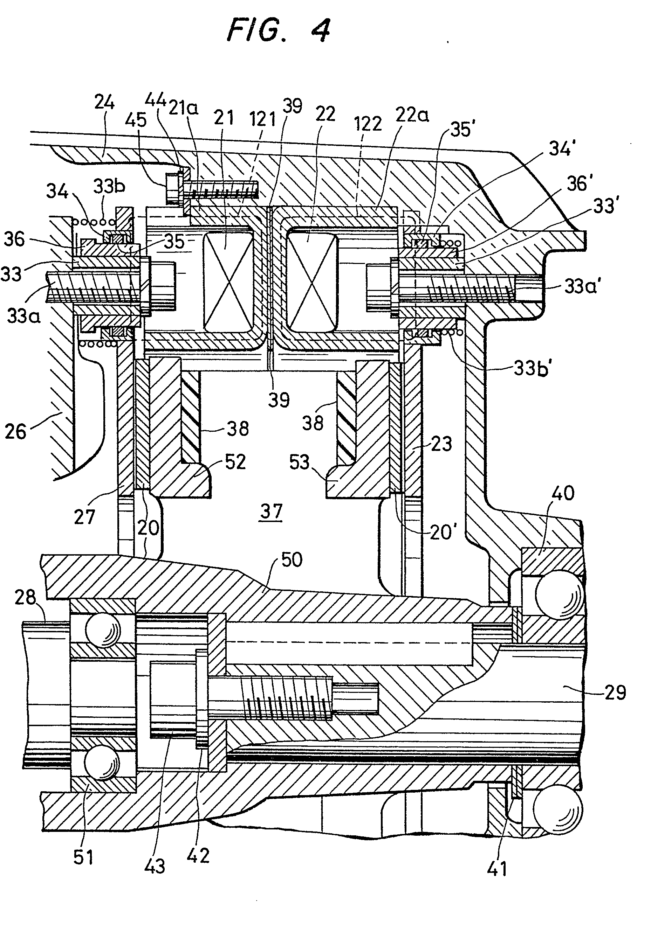

Referring to Figs. 3 and 4, there is shown a preferred embodiment of the solenoid clutch motor according to the present invention. The solenoid clutch motor of the invention comprises a first housing portion 14 and a second housing portion 24 which are releasably coupled together by a suitable means. A rotor 25 is mounted on a rotor shaft 28 concentrically with a stator 15. The rotor shaft 28 is journalled through a ball bearing 16 which is secured to the first housing portion 14 by screws 17. A clutch coil 21 is mounted within a ring core 21a which is open toward the rotor 25. A brake coil 22 is similarly mounted within a ring core 22a which is open in the opposite direction and rigidly secured to the second housing portion 24. The core 21a is secured by a bolt 45 with a washer 44 to the housing 24 with a plurality of thin plates or adjustment shims 39 in lamination being interposed between the cores 21a and 22a. A plurality of angularly spaced apart guide pins 34 are firmly secured by screws 33a to a flywheel 26 which is mounted on the rotor shaft 28. A driving clutch disc 27 is formed with a plurality of angularly spaced apart openings in each of which is securely fixed a collar 34 having a groove in which a noise absorbing rubber ring 35 is disposed. In each of the rubber rings 35 is tightly received a metal bearing or slide ring 36 and this ring 36 is axially slidable on the guide pin 33. A compression spring 33b, provided around each of the collars 34, extends between the flywheel 26 and the driving clutch disc 27, whereby the latter is axially but not rotatably slidably secured to the flywheel 26. A similar arrangement is provided for the stationary brake disc 23 by corresponding elements designated by the same but primed numerals so that the brake disc 23 can be axially slidable.

A clutch-and-brake rotary member 37 is provided having a hollow hub portion 50 which is secured by a bolt 43 with a washer 42 to an output shaft 29 which is in turn rotatably mounted in coaxial relation with the rotor shaft 28 on a ball bearing 40 which is secured to the second housing portion 24. The flywheel-side of the hollow hub portion 50 is slid over a ball bearing 51 and the opposite side thereof is in abutment contact with a ball bearing 40 with one or more shims 41 provided therebetween. The rotary member 37 is formed with a pair of discs 52 and 53 each having a lining 20 on the outer side and a noise absorbing rubber sheet 38 on the inner side for reducing noise generated when the lining is brought into contact with the mating surface.

When the clutch coil 21 is energized, a magnetic circuit 121 is formed passing through the core 21a and the outer peripheral portion of the driving clutch disc 27 as illustrated in Fig. 4 to cause the bearings 36 of disc 27 to slide over the guide pins 33 axially toward the core 21a and therefore the driving clutch disc 27 is brought into pressure contact with the lining 20 of rotary member 37 to transmit the motive power of the driving rotor 25 to the output shaft 29. Upon energization of the brake coil 22 a magnetic circuit 122 is fomrd which passes through the core 22a and the outer circumferential portion of the brake disc 23 to cause the bearings 36' of disc 23 to slide over the guide pins 33' axially toward the core 22a, so that the brake disc 23 is brought into pressure contact with the lining 20' of rotary member 37.

By appropriately selecting the number of shims 41 the axial position of the rotary member 37 can be precisely determined and by appropriately selecting the number of shims 39 the axial position of the clutch coil 21 and hence the air gap between the core 21a and clutch disc 27 can be precisely determined. Therefore, the magnetic coupling between the clutch coil 21 and clutch disc 27 can be appropriately determined.

A sensor 60 is preferably provided to detect when the air gap between the clutch disc 27 and core 21a reduces to a predetermined value after the lining 20 has worn out to a point of danger. When the sensor 60 is activated a warning signal is given to alert the operator to reduce the number of shims 39 to move the core 21a away from the clutch disc 27 by an amount corresponding to the amount of wear on lining 20.

On the other hand, if the lining 20' has worn out, the loss of pressure contact between the brake discs 23 and 53 can be compensated by reducing the number of shims 41.

When adjusting the axial position of either the rotary member 37 or the core 21a, it is simply necessary to decouple the first and second housing portions 14 and 24 from each other.  This reveals the adjusting bolts 43 and 45 to make them readily accessible for loosening.

Various modifications of the invention will be apparent to those skilled in the art without departing from the scope of the invention which is only limited by the appended claims.

**0067662**

## CLAIMS

1.        A solenoid clutch motor comprising a stator (15), a rotor (25) securely mounted on a rotor shaft (28), a flywheel (26) secured to said rotor shaft for rotation therewith, an output shaft (29) coaxial with said rotor shaft (28), first and second cores (21a, 22a) each being open in opposite directions, clutch and brake coils (21, 22) mounted in said first and second cores respectively, a driving clutch disc (27) axially spaced from the open end of said first core (21a) for making pressure contact with a driven clutch disc (52) in response to energization of said clutch coil (21), a stationary brake disc (23) axially spaced from the open end of said second core for making pressure contact with a rotary brake disc (53) in response to energization of said brake coil (22), <u>characterized</u> in that said driven clutch disc (52) and said rotary brake disc (53) are provided on the opposite sides of a rotary member (37) and said rotary member is releasably mounted on said output shaft (29), in that said driving clutch disc (27) is axially but not rotatably slidably mounted to said flywheel (26) and said stationary brake disc (23) is axially slidably but not rotatably mounted, and in that means (41, 43; 39, 45) is provided for axially adjusting the position of one of said rotary member (37) and said first core (21a).

2.      A solenoid clutch motor as claimed in claim 1,
characterized in that said output shaft (29) is rotatably
mounted on a ball bearing (40), and said adjusting means
comprises spacer means (41) disposed between said rotary
member (37) and said ball bearing (40) and means for
releasably fixing said rotary member (37) to said output
shaft (29).

3.      A solenoid clutch motor as claimed in claim 1 or 2,
characterized in that said rotary member (37) is formed
with a hub (50) in which said output shaft (29) is
journalled, said fixing means (43) axially extends
coaxially with said output shaft (29) and threadably
engages said hub with said output shaft (29).

4.      A solenoid clutch motor as claimed in claim 1 or 2 or 3
2, characterized in that said adjusting means comprises
spacer means (39) disposed between said first and second
cores (21a, 22a) and means (45) for releasably fixing said
first core (21a) to a stationary member (24).

5.      A solenoid clutch motor as claimed in claim 2 or
4, characterized in that each of said spacer means
comprises at least one shim (41; 39).

**0067662**

6.      A solenoid clutch motor as claimed in claim 2 [*any preceding*],
characterized in that said driving clutch disc is secured
to said flywheel by axially movable means (33, 34, 35) at
angularly spaced apart locations adjacent to said first
core (21a) and means (33b) for biasing said driving clutch
disc (27) in a direction toward said driven clutch disc
(52).

7.      A solenoid clutch motor as claimed in claim [*any preceding*] 1 or
6, characterized in that said stationary brake disc (23) is
axially movably but not rotatably mounted by means (33',
34', 35') to a stationary member (24) at angularly spaced
apart locations adjacent to said second core (22a) and
means (3b') is provided for biasing said stationary brake
disc (23) in a direction toward said rotary brake disc
(53).

FIG. 1
(PRIOR ART)

7 6 11 10

1 2 4

3

10

12

8

9

5

101 102

0067662

# FIG. 2
## (PRIOR ART)

## FIG. 3

4/4

0067662

FIG. 4

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-4 172 985  (MEIER)<br>* column 3, lines 30-68; column 4, column 5, lines 1-7, 32-60; figures 1,2 * | 1-4,7 | H 02 K  7/112<br>F 16 D  67/06 |
| Y | US-A-3 750 781  (LENGSFELD)<br>* column 1, lines 62-68; column 2; column 3, lines 1-49; figures 1,2 * | 1,6 | |
| A | GB-A-2 006 358  (BRINKMAN)<br>* page 2, lines 5-26, 44-59, 70-94; figures 1-4 * | 4,5 | |
| A | US-A-3 777 864  (MARTI)<br>* column 5, lines 15-21; column 7, lines 14-22; figures 1,2 * | 4,5 | |
| P,A | EP-A-0 045 591  (MATSUSHITA)<br>* page 3, lines 5-25; pages 4-15; figures 2-7 * | 3,6,7 | TECHNICAL FIELDS SEARCHED (Int. Cl. 3)<br><br>H 02 K<br>F 16 D |

The present search report has been drawn up for all claims

| Place of search<br>THE HAGUE | Date of completion of the search<br>17-09-1982 | Examiner<br>TIO K.H. |
|---|---|---|